(19) Europäisches Patentamt
European Patent Office
Office européen des brevets

(11) Veröffentlichungsnummer: **0 195 400 B1**

(12) # EUROPÄISCHE PATENTSCHRIFT

(45) Veröffentlichungstag der Patentschrift: **12.06.91**

(51) Int. Cl.5: **H01H 13/70**

(21) Anmeldenummer: **86103609.3**

(22) Anmeldetag: **18.03.86**

(54) **Vorrichtung zum Einstellen der Neigung einer Tastatur.**

(30) Priorität: **20.03.85 DE 3510120**

(43) Veröffentlichungstag der Anmeldung:
**24.09.86 Patentblatt 86/39**

(45) Bekanntmachung des Hinweises auf die Patenterteilung:
**12.06.91 Patentblatt 91/24**

(84) Benannte Vertragsstaaten:
**CH DE FR GB IT LI NL SE**

(56) Entgegenhaltungen:

**IBM TECHNICAL DISCLOSURE BULLETIN, Band 25, Nr. 6, November 1982, Seiten 2900-2901, New York, US; I. Golledge: "Keyboard tilt mechanism"**

**IBM TECHNICAL DISCLOSURE BULLETIN, Band 26, Nr. 7A, December 1983, Seiten 3277-3278, New York, US; D. ALLEN; "Dual tilt support legs for keypad"**

(73) Patentinhaber: **Siemens Aktiengesellschaft**
**Wittelsbacherplatz 2**
**W-8000 München 2(DE)**

(72) Erfinder: **Elser, Herbert**
**Elmauer Strasse 8**
**W-8000 München 70(DE)**

**EP 0 195 400 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Einstellen der Neigung einer Tastatur gemäß dem Oberbegriff des Patentanspruches 1.

In zunehmenden Maße spielen für den Einsatz von Tastaturen (US-PS 3 830 352) ergonomische Forderungen eine Rolle. Ein wesentlicher Gesichtspunkt ist dabei die Höhe der Tastatur. In der letzten Zeit hat sich allgemein für eine Tastaturhöhe von 30 mm (mittlere Tastenreihe) ein Neigungswinkel von 6° als günstig erwiesen. Tastaturen die unter einem solchen Neigungswinkel gegen eine Standfläche geneigt sind, entsprechen den Anforderungen eines mehr oder weniger genormten Arbeitsplatzes und gehen von einer Durchschnittsgröße einer Bedienperson aus.

Um eine spätere Änderung der Neigung der Tastatur zu ermöglichen, ist es aus der DE-PS 30 14 423 bekannt, in der Tastatur einen Verstellmechanismus zur kontinuierlichen Einstellung der Neigung zwischen einen Minimal- und einen Maximalwert vorzusehen. Dieser Verstellmechanismus besteht aus zwei verstellbaren Kurvenscheiben, die eine Auflage für die Tastatur auf einer Standfläche bilden.

Neuere Untersuchungen haben jedoch ergeben, daß eine einmal eingestellte Tastaturneigung nur selten verändert wird. Deshalb besteht bei einem Mechanismus zum kontinuierlichen Verstellen der Tastaturneigung die Gefahr, daß eine einmal vorgenommene Fehleinstellung dauernd beibehalten wird. Außerdem ist ein derartiger Verstellmechanismus relativ kompliziert und teuer in der Herstellung.

In dem IBM Technical Disclosure Bulletin, Vol. 25, No. 6, November 1982 wird eine Vorrichtung zur Einstellung der Neigung einer Tastatur beschrieben, die zwei aus dem Gehäuse ausschwenkbare Kurvenscheiben aufweist. Die Kurvenscheiben werden über einen Knopf betätigt, der im Gehäuse geführt ist und mit seiner Achse durch die Kurvenscheiben verdrehsicher greift. An seinem hinteren Teil ist die Achse des Knopfes durch eine Beilagscheibe gesichert. Zum Verdrehen der Kurvenscheiben wird der Knopf entgegen der Wirkung einer zwischen dem Knopf und dem Trägerteil des Gehäuses befindlichen Druckfeder axial nach innen gedrückt und verdreht, wobei an dem Knopf angebrachte Zähne durch entsprechende Öffnungen des Trägerteiles greifen und unter der Wirkung der Druckfeder verdreht hinter den Öffnungen verrasten.

Ein derartiger Verstellmechanismus ist durch die Vielzahl der Einzelteile kompliziert und teuer in der Herstellung und umständlich zu montieren.

Aufgabe der Erfindung ist es eine montagefreundliche Vorrichtung der eingangs genannten Art so auszugestalten, daß sie kostengünstig mit einer geringstmöglichen Anzahl von Einzelteilen hergestellt werden kann. Die gesamte Vorrichtung soll außerdem störungsunanfällig sein und eine leichte Überprüfung der Einstellposition ermöglichen.

Diese Aufgabe wird in einer Vorrichtung der eingangs genannten Art gemäß dem kennzeichnenden Teil des ersten Patentanspruches gelöst.

Vorteilhafte Ausführungsformen der Erfindung sind in den Unteransprüchen gekennzeichnet.

Die erfindungsgemäße Vorrichtung hat den Vorteil, daß sie vollständig aus Kunststoff hergestellt werden kann und keine besonderen zusätzlichen Metallteile benötigt. Über einen auf der Kurvenscheibe angeordneten Griffhöcker kann die Kurvenscheibe leicht verstellt werden. Griffteil, Kurvenscheibe und die zugehörige Verstellachse können einstückig aus Kunststoff hergestellt sein und werden in dem Tastaturgehäuse einfacher Weise verschnappt.

Um das Verstellen optisch zu erleichtern kann das Griffelement eine gegenüber dem Tastaturgehäuse unterschiedliche Farbgebung aufweisen.

Ausführungsformen der Erfindung sind in den Zeichnungen dargestellt und werden im folgenden im einzelnen näher beschrieben. Es zeigen

Fig. 1 eine vertikale Schnittdarstellung der Vorrichtung,

Fig. 2 eine Frontansicht der Vorrichtung mit zwei Verstellpositionen,

Fig. 3 eine horizontale Schnittdarstellung der Vorrichtung und

Fig. 4 eine schematische Darstellung einer Frontansicht einer Verstellvorrichtung mit drei Verstellhöhen.

Ein hier nicht im einzelnen dargestelltes Kommunikationsendgerät weist eine zugehörige, mit dem Kommunikationsendgerät über eine flexible Leitung verbundene Tastatur auf, die höhenverstellbar ausgebildet ist. Die aus Kunststoffspritzguß hergestellte Tastatur besteht aus einem Tastaturgehäuse 1 mit seitlich angeordneten Ausnehmungen 2 zur Aufnahme des der Höhenverstellung des Neigungswinkels der Tastatur dienenden zwei Verstellelemente. Die Verstellelemente bestehen jeweils aus einer länglich ovalen exzentrisch gelagerten Kurvenscheibe 3 (Fußelement), mit einem Griffelement in Form eines in Längsrichtung verlaufenden Griffhöckers 4. Die Kurvenscheibe 3 ist über einen Achsansatz 5 ihrer Verstellachse 6 in einem Trägerteil 7 des Tastaturgehäuses 1 gelagert. In Axialrichtung der Verstellachse hinter dem Trägerteil 7 befindet sich ein federndes Ansatzstück 8, aus zwei am Tastaturgehäuse 1 ausgebildeten federnden Stegen 8/1 und 8/2. Diese federnden Stege 8/1 und 8/2 umfassen die Verstellachse der Kurvenscheibe 3, die in diesem Bereich als Mehrkantrastelement 9 (Vierkant) ausgebildet ist. An dieses Mehrkantrastelement 9 schließt sich ein kegelförmiger Zapfen 10 an, der dazu dient die Kurvenscheibe und damit das gesamte Verstellelement zwischen den Stegen 8/1 und 8/2 des Ansatzstükkes zu verschnappen.

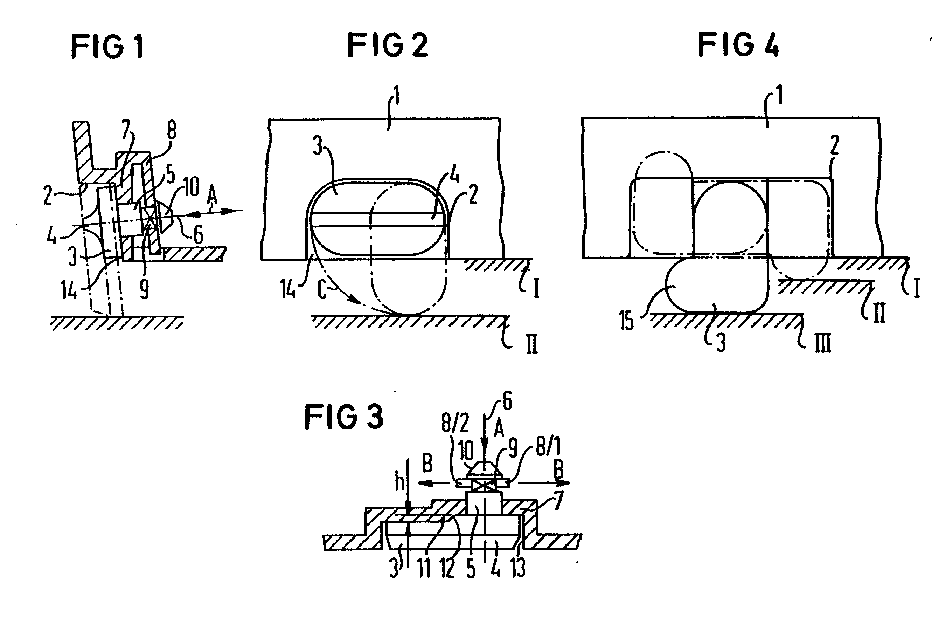

Das Trägerteil 7 weist auf seiner der Kurvenscheibe zugewandten Fläche eine Rastkante 11 auf, die mit einer Auflaufschräge 12 der Kurvenscheibe 3 zusammenarbeitet. Gemäß dem Ausführungsbeispielen der Fig. 1 bis 3 erfolgt die Höhenverstellung der Tastatur durch Schwenken der Kurvenscheiben 3 um 90° aus der in den Fig. 1 und 2 mit ausgezogenen Linien dargestellten Position entsprechend der Pfeilrichtung C, in die gestrichelte Position. Beim Verdrehen der Kurvenscheibe 3 legt sich die Auflaufschräge 12 an die Rastkante 11 an und überwindet diese. Die Kurvenscheibe bewegt sich dabei um das Maß h in Richtung A und schnappt nach vollendeter Drehung in die Ausgangsstellung zurück. Das Zurückschnappen in die Ausgangsstellung der Kurvenscheibe wird durch die am Gehäuse 1 angespritzten federnden Stege 8/1 und 8/2 bewirkt. Die seitliche Justierung der Kurvenscheibe in der gestrichelt dargestellten ausgeschwenkten Position erfolgt durch die Rastkante 11 und die Seitenwand 13 des Trägerteiles 7. Eine zusätzliche spielfreie Justierung in den dargestellten Verstellhöhen I und II zugeordneten Positionen, wird durch das Mehrkantrastelement 9 bewirkt, was bei der dargestellten Ausführungsform als Vierkant ausgebildet ist.

Beim Zurückstellen von der der Verstellhöhe II zugeordneten Stellung in die der Verstellhöhe I zugeordneten Stellung durch Verdrehen der Kurvenschiebe 3 in der Pfeilrichtung C, muß wieder die Rastkante 11 überwunden werden, die zu diesem Zwecke ebenfalls eine Auflaufschräge 14 aufweist.

Die Montage der Kurvenscheibe mit ihren Zapfen 10 erfolgt durch Verschnappen zwischen die federnden Stege 8/1 und 8/2, diese werden dabei in Richtung B verdrängt und rasten in der mit einem Vierkant 9 versehenen Nut ein.

Ordnet man gemäß einem Ausführungsbeispiel entsprechend der Fig. 4 am Fußbereich der Kurvenscheibe 3 ein zusätzliches Kurvenstück 15 an, das die Seitenfläche der Kurvenscheibe (Stellelement) höckerförmig überragt, so sind drei Verstellhöhen I, II und III realisierbar. In der Ruhelage entsprechend der Höhenposition I ragt das Kurvenstück 15 nach oben. Bei einem Verdrehen der Kurvenscheibe 3 um 90° wird die Verstellhöhenposition III erreicht. Ein weiteres Verdrehen um zusätzliche 90° läßt das Kurvenstück 15 aus dem Tastaturgehäuse ragen, so daß die Tastatur die Verstellhöhenposition II einnimmt. Am sonstigen Aufbau der Verstellelemente ändert sich jedoch nichts. Allein die Ausnehmung 2 am Tastaturgehäuse 1 muß entsprechend dem größeren Verschwenkwinkel größer ausgestaltet sein.

Um die verschiedenen Verstellpositionen leichter kenntlich zu machen bzw. die Bedienperson auf die Verstellmöglichkeit aufmerksam zu machen, ist das Verstellelement gegenüber dem Tastaturgehäuse andersfarbig ausgestaltet.

## Ansprüche

1. Vorrichtung zum Einstellen der Neigung einer Tastatur, mit einem alphanumerischen Tastenfeld und zwei an dem Tastaturgehäuse (1) ausschwenkbar angebrachten Kurvenscheiben, (3) die eine Auflage für die Tastatur auf einer Standfläche bilden, wobei mit den Kurvenscheiben (3) Griffelemente (4) fest verbunden sind und die Kurvenscheiben (3) entsprechend den vorgesehenen Verstellpositionen eine definierte Anzahl von Rastungen aufweisen, und die Kurvenscheiben (3) über ihre Verstellachse (6) in einem Trägerteil (7) des Tastaturgehäuses positionsabhängig verrastbar gelagert sind, **dadurch gekennzeichnet**, daß Griffelement (4), Kurvenscheibe (3) und Verstellachse (6) einstückig ausgebildet sind und daß in Axialrichtung (A) hinter dem Trägerteil (7) am Tasturgehäuse (1) ein federndes Ansatzstück (8) angeordnet ist, in dem die Verstellachse (6) schnappbar befestigt ist.

2. Vorrichtung nach Anspruch 1, **dadurch gekennzeichnet**, daß das Trägerteil (7) im Anlagebereich der Kurvenscheibe (3) eine Rastkante (11) aufweist, hinter der die Kurvenscheibe (3) mit einer Anlagekante im ausgeschwenkten Zustand verrastet und daß die Kurvenscheibe (3) bzw. die Rastkante (11) eine Auflaufschräge (12, 14) aufweist.

3. Vorrichtung nach einem der Ansprüche 1 oder 2, **dadurch gekennzeichnet**, daß die Verstellachse (6) über ein Mehrkantrastelement (9) in das spreizbar ausgebildete federnde Ansatzstück (8) eingreift.

4. Vorrichtung nach einem der Ansprüche 1 bis 3, **dadurch gekennzeichnet**, daß die Kurvenscheibe (3) aus einem länglich ovalen exzentrisch gelagerten Element besteht, mit einem darauf angeordneten Griffhöcker.

5. Vorrichtung nach Anspruch 4, **dadurch gekennzeichnet**, daß zum Erzeugen einer dritten Verstellhöhe im Fußbereich des ovalen Elementes ein zusätzliches Kurvenstück (15) angeordnet ist, so daß in einer gegenüber der eingeschwenkten Ausgangsposition um 180° verschwenkten Position, dieses Kurvenstück (15) als Fußelement aus dem Tastaturgehäuse (1) ragt.

6. Vorrichtung nach einem der Ansprüche 1 bis 5,
**dadurch gekennzeichnet**, daß das Griffelement (4) eine gegenüber dem Tastaturgehäuse (1) unterschiedliche Farbgebung aufweist.

## Claims

1. Device for adjusting the inclination of a keyboard, having an alphanumeric key array and two cam plates (3) mounted in a swivel-out manner on the keyboard casing (1), which cam plates form a support for the keyboard on a standing surface, handle elements (4) being rigidly connected to the cam plates (3) and said cam plates (3) having a defined number of detents corresponding to the number of adjustment positions provided and being lockably mounted in a position-dependent manner in a carrier part (7) of the keyboard casing by means of their adjustment shaft (6),
characterised in that the handle element (4), cam (3) and adjustment shaft (6) are constructed integrally, and in that a resilient shoulder piece (8) is arranged on the keyboard casing (1) in the axial direction (A) behind the carrier part (7), in which shoulder piece the adjustment shaft (6) is secured in a snap-in manner.

2. Device according to Claim 1, characterised in that the carrier part (7) has in the contact region of the cam plate (3) a locking edge (11), behind which the cam plate (3) locks with a contact edge in the swivelled-out state and in that the cam plate (3) or the locking edge (11) has a run-up slope (12, 14).

3. Device according to one of Claims 1 or 2, characterised in that the adjustment shaft (6) engages via a multi-edge locking element (9) into the expandable resilient shoulder piece (8).

4. Device according to one of Claims 1 to 3, characterized in that the cam plate (3) consists of an elongate, oval, eccentrically mounted element, with a handling hump arranged thereon.

5. Device according to Claim 4, characterised in that, in order to produce a third adjustment level in the foot region of the oval element, an additional cam piece (15) is arranged so that, in a position swivelled by 180° in relation to the swivelled-in starting position, this cam (15) projects out of the keyboard casing (1) as a foot element.

6. Device according to Claims 1 to 5, characterised in that the handle element (4) has a different colour from that of the keyboard casing (1).

## Revendications

1. Dispositif pour régler l'inclinaison d'un clavier, comportant un panneau de touches alphanumériques et deux disques à came (3), qui sont montés de manière à pouvoir être ressortis par pivotement sur le boîtier (1) du clavier et forment un appui pour le clavier sur une surface de support, et dans lequel des éléments de préhension (4) sont raccordés rigidement aux disques à came (3), qui comportent un nombre défini de positions d'encliquetage, et les disques à came (3) sont montés, de manière à pouvoir être encliquetés en fonction de la position, au moyen d'un axe de déplacement (6) dans une partie de support (7) du boîtier du clavier, caractérisé par le fait que l'élément de préhension (4), le disque à came (3) et l'axe de déplacement (6) sont raccordés d'un seul tenant et que sur le boîtier (1) du clavier, en arrière de la partie de support (7), est disposé, dans la direction axiale (A), un embout saillant élastique (8), dans lequel l'axe de déplacement (6) est fixé d'une manière encliquetable.

2. Dispositif suivant la revendication 1, caractérisé par le fait que la partie de support (7) possède, dans la zone d'application du disque à came (3), un bord d'encliquetage (11), derrière lequel le disque à came (3) s'encliquette par un bord d'application, à l'état rentré par pivotement, et que le disque à came (3) ou le bord d'encliquetage (11) possède un biseau oblique (12,14).

3. Dispositif suivant l'une des revendications 1 ou 2, caractérisé par le fait que l'axe de déplacement (6) s'engage, par l'intermédiaire d'un élément d'encliquetage à plusieurs pans (9), dans l'embout saillant élastique (8) agencé de manière à pouvoir être écarté.

4. Dispositif suivant l'une des revendications 1 à 3, caractérisé par le fait que le disque à came (3) est constitué par un élément allongé oval, monté de façon excentrée et sur lequel est disposé un bossage de préhension.

5. Dispositif suivant la revendication 4, caractérisé par le fait que pour l'obtention d'une troisième hauteur de déplacement, un élément à came supplémentaire (15) est disposé dans la zone du pied de l'élément oval, de sorte que, dans une position pivotée de 180° par rapport à la position de départ rentrée par pivotement, cet élément à came (15) fait saillie, en tant qu'élément formant pied, hors du boîtier (1) du clavier.

6. Dispositif suivant l'une des revendications 1 à 5, caractérisé par le fait que l'élément de préhension (4) possède une couleur différente de celle du boîtier (1) du clavier.

FIG 1
FIG 2
FIG 3
FIG 4
1
2
3
3'
4
5
6
7
8
8/1
8/2
9
10
11
12
13
14
15
A
B
C
h
I
II
III